# EUROPEAN PATENT APPLICATION

(11) **EP 4 741 072 A1**
(43) Date of publication of application: **13.05.2026**
(21) Application number: 25154027.4
(22) Date of filing: 27.01.2025
(51) Int. Cl.: B07C 5/34, G07F 7/06

(54) **BEVERAGE CONTAINER SORTING AND RECYCLING DEVICE**

(30) Priority: 08.11.2024 CN 202422722524 U
(71) Applicant: Tomra Recycling Technology (Xiamen) Co., Ltd., Xiamen, Fujian 361006 (CN)
(72) Inventor: ZHU, Shanshan, Xiamen, 361006 (CN); ZHU, Yongyang, Xiamen, 361006 (CN); LAN, Chenlong, Xiamen, 361006 (CN); HE, Chunjian, Xiamen, 361006 (CN); DONG, Chao, Xiamen, 361006 (CN)
(74) Representative: Chung, Hoi Kan

(57) **Abstract**

Provided is a beverage container sorting and recycling device, comprising a bottle feeding port (2), a conveying mechanism (4), an Al recognition mechanism (7), a sorting mechanism (5), and a material storage bin (6). The Al recognition mechanism (7) is arranged on the periphery of the conveying mechanism (4), and a light source (9) is further arranged on the periphery of the Al recognition mechanism (7). The sorting mechanism (5) is mounted on one side of the conveying mechanism (4). The material storage bin (6) comprises a glass bottle material storage bin (61), a plastic bottle material storage bin (62), and a can material storage bin (63). The sorting mechanism (5) sorts a beverage container to a corresponding material storage bin (61, 62, 63) according to the recognition result of the Al recognition mechanism (7).

## Description

### TECHNICAL FIELD

The present application relates to the field of beverage container classification and recycling devices, in particular to a beverage container sorting and recycling device.

### BACKGROUND

In current retail and consumption environments, stores widely use glass bottles, plastic bottles and cans as main packaging materials for beverages. These packaging materials provide convenience for consumers but also cause increasingly severe environmental pollution and resource waste problems.

Because differentiated technologies and processes are required in the recycling process of packaging containers of different materials, if unified and effective classification and recycling are not carried out, mixed and incorrect feeding of containers will lead to low recycling efficiency, an increase in processing costs, and even a decrease in the quality of recycled materials, which further exacerbate environmental pollution and resource waste.

Therefore, the present application studies an efficient and intelligent beverage container sorting and recycling device, which enables accurate classification and storage of glass bottles, plastic bottles and cans, improves container recycling rate, reduces mixed and incorrect feeding, enhances resource utilization, and alleviates environmental pressure.

### SUMMARY

In order to achieve more accurate classification and storage of containers, improve recycling rate, and alleviate environmental pressure, the present application provides a beverage container sorting and recycling device.

The beverage container sorting and recycling device provided in the present application adopts the following technical solution:
A beverage container sorting and recycling device includes a bottle feeding port, a conveying mechanism, an Artificial Intelligence (AI) recognition mechanism, a sorting mechanism, and a material storage bin, where the AI recognition mechanism is arranged on the periphery of the conveying mechanism, and a light source is further arranged on the periphery of the AI recognition mechanism; the sorting mechanism is mounted on one side of the conveying mechanism; the material storage bin includes a glass bottle material storage bin, a plastic bottle material storage bin, and a can material storage bin; the sorting mechanism is arranged to sort a beverage container to a corresponding material storage bin according to the recognition result of the AI recognition mechanism.

By adopting the above technical solution, the beverage container is fed from the bottle feeding port, the AI recognition mechanism recognizes the type of the beverage container, the beverage container is conveyed to the sorting mechanism by the conveying mechanism, and the sorting mechanism sorts the corresponding beverage container into the glass bottle material storage bin, the plastic bottle material storage bin or the can material storage bin according to the recognition result of the AI recognition mechanism, making the classification of the container more accurate, improving the recycling rate, and alleviating environmental pressure.

Optionally, the bottle feeding port includes an annular lamp; when the device is in an idle state, the annular lamp displays a first color; when the device is in a recycling process, the annular lamp displays a second color; when the device malfunctions or is maintained, the annular lamp displays a third color; where the first color, the second color, and the third color are different from each other.

Optionally, the beverage container sorting and recycling device further includes a code reading mechanism arranged on one side of the bottle feeding port and located between the bottle feeding port and the conveying mechanism.

Optionally, the code reading mechanism includes a mounting rack and a plurality of code readers, the mounting rack has a feeding port, and the code readers are arranged at intervals along the periphery of the feeding port.

By adopting the above technical solution, the beverage container can be effectively scanned by at least one code reader when passing through the feeding port, regardless of the direction of barcode, thereby better obtaining the information of the beverage container.

Optionally, the AI recognition mechanism is arranged to obtain the information of the beverage container for comparing with the information obtained by the code reading mechanism; when the two pieces of information are consistent, the conveying mechanism is arranged to continue conveying the beverage container; when the two pieces of information are inconsistent, the conveying mechanism is arranged to return the beverage container to the bottle feeding port.

By adopting the above technical solution, malicious fraudulent behaviors, such as feeding other objects pasted with barcode into the device, can be prevented. The dual verification mechanism greatly reduces the possibility of recognition errors and improves the accuracy of sorting and recycling.

Optionally, a weight sensor is further arranged on the conveying mechanism.

By adopting the above technical solution, it can be determined through the weight sensor whether the weight of each beverage container meets set weight requirements. By sensing excessively heavy or light weight of the beverage container, whether there is residual liquid in the beverage container or suspected fraud can be determined, and if so, the beverage container will be rejected. The beverage container containing a large amount of residual liquid will affect subsequent recycling quality. Therefore, the weight sensor can assist in improving the accuracy of sorting and recycling.

Optionally, a metal sensor is further arranged on the conveying mechanism.

By adopting the above technical solution, the metal sensor can distinguish between three types of materials including iron, aluminum and others. Its main goal is to recognize whether the containers are aluminum cans. If some markets reject iron cans, the beverage containers can be distinguished by the metal sensor to improve the accuracy of sorting and recycling.

Optionally, the conveying mechanism includes two conveyor belts arranged side by side, and heights of the two conveyor belts on the sides adjacent to each other are lower than heights of the two conveyor belts on the sides away from each other.

By adopting the above technical solution, the beverage container, when placed between the two conveyor belts, can be conveyed more stably, and residual liquid, if the fed container contains, will gather on a middle low-lying side for easy cleaning later.

Optionally, the sorting mechanism includes a driving component and two sorting components, a guide component is arranged on each of the sides of the sorting components that are away from each other, and a guide component is also arranged on a side of one of the sorting components that is adjacent to the other sorting component; when the driving component drives the two sorting components towards the same side, the beverage container is arranged to fall into the plastic bottle material storage bin or the glass bottle material storage bin along the guide component; when the driving component drives the two sorting components towards two sides, the beverage container is arranged to fall into the can material storage bin along the guide component.

Optionally, the beverage container sorting and recycling device further includes a compactor, where the compactor is arranged above the plastic bottle material storage bin and the can material storage bin and connected to the sorting mechanism.

By adopting the above technical solution, beverage containers enter the compactor through the sorting mechanism, and plastic bottles and cans are compacted by the compactor and then fall into the corresponding material storage bins, which can reduce the space occupied by the plastic bottles and cans and enables the material storage bins to store more beverage containers.

In summary, the present application includes at least one of the following beneficial technical effects:
1. A beverage container is fed from the bottle feeding port, the information of the beverage container is obtained by the AI recognition mechanism to classify the beverage container, the beverage container is conveyed to the sorting mechanism by the conveying mechanism, and the sorting mechanism sorts the corresponding beverage container into the glass bottle material storage bin, the plastic bottle material storage bin or the can material storage bin according to the recognition result of the AI recognition mechanism, making the classification of the container more accurate, improving the recycling rate, and alleviating environmental pressure;
2. The beverage container can be effectively scanned by at least one code reader when passing through the feeding port, regardless of the direction of barcode, thereby better obtaining the information of the beverage container;
3. Malicious fraudulent behaviors, such as feeding other objects pasted with barcode into the device, can be prevented. The dual verification mechanism greatly reduces the possibility of recognition errors and improves the accuracy of sorting and recycling.

### BRIEF DESCRIPTION OF THE DRAWINGS

FIG. 1 is a schematic structural diagram of a beverage container sorting and recycling device according to an embodiment of the present application;
FIG. 2 is a schematic diagram of an internal structure of the beverage container sorting and recycling device according to an embodiment of the present application, with a body removed;
FIG. 3 is an exploded structural diagram of a bottle feeding port in the beverage container sorting and recycling device according to an embodiment of the present application;
FIG. 4 is a schematic structural diagram of a code reading mechanism in the beverage container sorting and recycling device according to an embodiment of the present application;
FIG. 5 is a schematic structural diagram showing a position relationship between an AI recognition mechanism and a conveying mechanism in the beverage container sorting and recycling device according to an embodiment of the present application;
FIG. 6 is a cross-sectional diagram of a weight sensor and a metal sensor in the beverage container sorting and recycling device according to an embodiment of the present application;
FIG. 7 is a schematic structural diagram showing a sorting mechanism in a glass bottle recycling state in the beverage container sorting and recycling device according to an embodiment of the present application;
FIG. 8 is a schematic structural diagram showing the sorting mechanism in a plastic bottle recycling state in the beverage container sorting and recycling device according to an embodiment of the present application;
FIG. 9 is a schematic structural diagram showing the sorting mechanism in a can bottle recycling state in the beverage container sorting and recycling device according to an embodiment of the present application; and
FIG. 10 is a schematic diagram of an internal structure of the beverage container sorting and recycling device according to an embodiment of the present application, with the front part of the body removed.

Reference numerals: 1. Body; 2. Bottle feeding port; 21. Annular lamp; 22. Mounting seat; 23. Transparent lampshade; 3. Code reading mechanism; 31. Mounting rack; 32. Code reader; 33. Feeding port; 4. Conveying mechanism; 5. Sorting mechanism; 51. Driving component; 511. First motor; 512. Second motor; 52. Sorting component; 521. First sorting component; 522. Second sorting component; 6. Material storage bin; 61. Glass bottle material storage bin; 62. Plastic bottle material storage bin; 63. Can material storage bin; 7. AI recognition mechanism; 8. Light source; 9. Weight sensor; 10. Metal sensor; 11. Guide component; 12. Compactor; 13. Printer.

### DETAILED DESCRIPTION

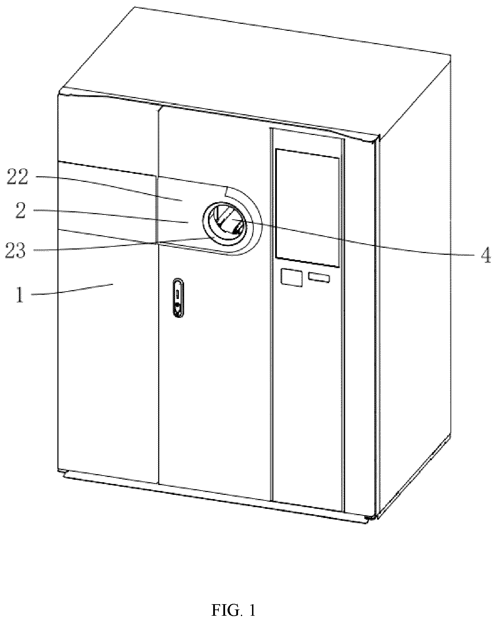

Further detailed explanation of the present application will be provided in conjunction with FIGs. 1-10.

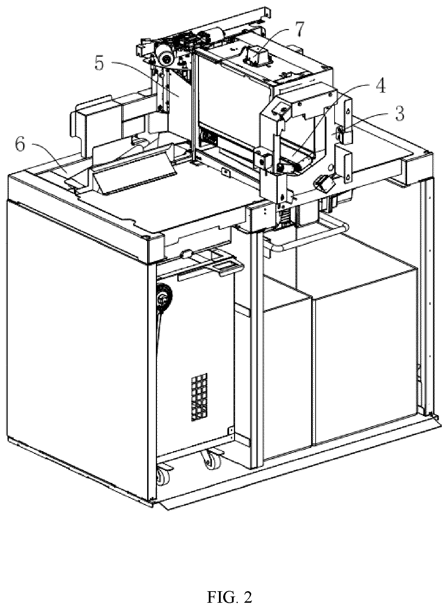

Embodiments of the present application disclose a beverage container sorting and recycling device. With reference to FIG. 1 and FIG. 2, the beverage container sorting and recycling device includes a body 1, a bottle feeding port 2, an AI recognition mechanism 7, a conveying mechanism 4, a sorting mechanism 5, and a material storage bin 6. The bottle feeding port 2 is arranged on one side of the body 1, and a beverage container is fed from the bottle feeding port 2. In some embodiments, the beverage container sorting and recycling device further includes a code reading mechanism 3. The code reading mechanism 3, the AI recognition mechanism 7, the conveying mechanism 4, the sorting mechanism 5, and the material storage bin 6 are all arranged in the body1.

Specifically, the code reading mechanism 3 is arranged on one side of the bottle feeding port 2, the beverage container is fed from the bottle feeding port 2, and barcode information on the beverage container is scanned by the code reading mechanism 3. The code reading mechanism 3 is located between the bottle feeding port 2 and the conveying mechanism 4, and the code reading mechanism 3 is used for assisting in obtaining information and then classifying the beverage container. In different embodiments, only the AI recognition mechanism 7 or both the code reading mechanism 3 and the AI recognition mechanism 7 may be provided. The AI recognition mechanism 7 is arranged on the periphery of the conveying mechanism 4 to recognize the beverage container, which is then conveyed to the sorting mechanism 5 by the conveying mechanism 4. The sorting mechanism 5 is mounted on the side of the conveying mechanism 4 away from the code reading mechanism 3, and the sorting mechanism 5 sorts the beverage container to the corresponding material storage bin 6 according to the recognition result of the AI recognition mechanism 7.

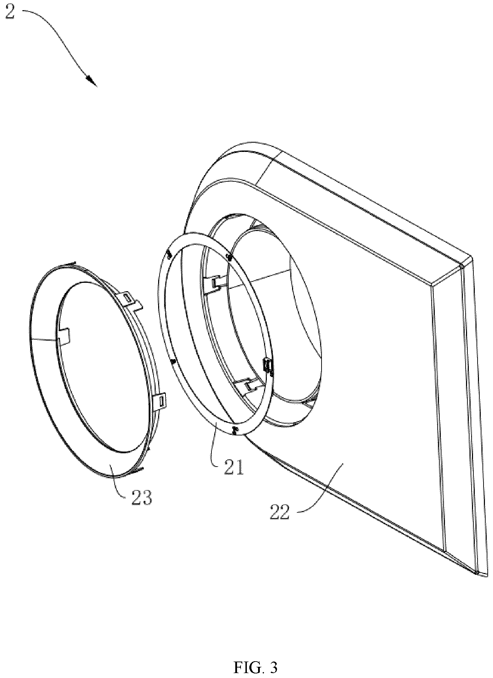

With reference to FIG. 3, in some embodiments, the bottle feeding port 2 includes an annular lamp 21. In this embodiment, the annular lamp 21 is composed of a circuit board and a lamp electrically connected to the circuit board. The bottle feeding port 2 further includes a mounting seat 22 and a transparent lampshade 23. As shown in FIG. 1, the mounting seat 22 is mounted on the body 1, the annular lamp 21 is mounted on the mounting seat 22, the transparent lampshade 23 covers the annular lamp 21 and is clamped onto the mounting seat 22, and a color displayed by the lamp is transmitted by the transparent lampshade 23.

When the device is in an idle state, the annular lamp 21 displays a first color, specifically green, and the annular lamp 21 displays normally green, indicating a user that "the machine is currently in a normal idle state and can be used for feeding a container"; when the device is in a recycling process, the annular lamp 21 displays a second color, specifically blue, and the annular lamp 21 can display normally blue or a breathing state, indicating the user that "the machine is in a container recognition state, please wait"; when the machine malfunctions or service personnel is maintaining the machine, the annular lamp 21 displays a third color, which is red, and the annular lamp 21 can display normally red or a flashing state, indicating the user that "the machine has malfunctioned, please do not feed any container". The first color, the second color, and the third color are different from each other. In other embodiments, the first color, the second color, and the third color may be other colors, and can be set according to the actual situation, as long as the three colors are different from each other.

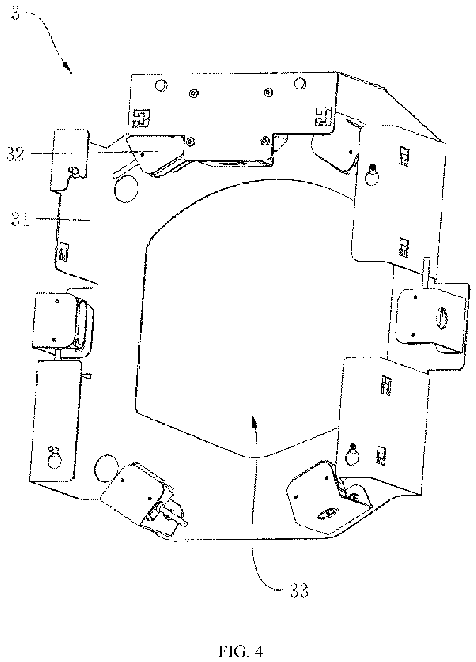

With reference to FIG. 4, in some embodiments, the code reading mechanism 3 includes a mounting rack 31 and a plurality of code readers 32, the mounting rack 31 is mounted on an inner side of the body 1, the mounting rack 31 has a feeding port 33, the feeding port 33 is connected to the bottle feeding port 2 and their center positions are on a same straight line. The beverage container enters from the feeding port 33 after passing through the bottle feeding port 2, and the code reader 32 senses the barcode information of the beverage container. The code readers 32 are arranged at intervals along the periphery of the feeding port 33. In this embodiment, six code readers 32 are uniformly arranged at intervals along the periphery of the feeding port 33 and screwed to the mounting rack 31 to ensure that at least one code reader 32 can scan the barcode information on the beverage container for more accurate classification. In other embodiments, different numbers of code readers can be adaptively set according to the scanning range of the code reader 32, the size of the feeding port 33, and the like.

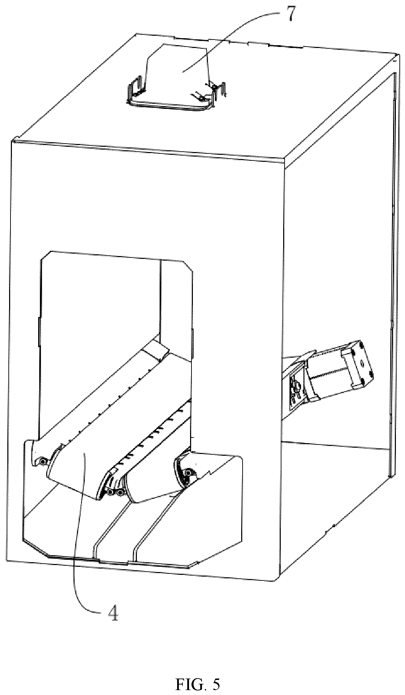

With reference to FIG. 5, in some embodiments, the conveying mechanism 4 includes two conveyor belts arranged side by side, and heights of the two conveyor belts on the sides adjacent to each other are lower than heights of the two conveyor belts on the sides away from each other. That is, the two conveyor belts are inclined upward along the side away from each other, so that two sides of the beverage container are attached between the two conveyor belts, the beverage container can be conveyed more stably, and residual liquid, if the fed container contains, will gather on a middle low-lying side for easy cleaning later.

In some embodiments, the AI recognition mechanism 7 of this embodiment includes a camera for obtaining information about the beverage container, including the type, brand, appearance, material, color, integrity, and the like of the beverage container, and the camera is arranged above the conveying mechanism 4. The information recognized by the AI recognition mechanism 7 is compared with the information obtained by the code reading mechanism 3. When the two pieces of information are consistent, the conveying mechanism 4 continues to convey the beverage container; and when the two pieces of information are inconsistent, the conveying mechanism 4 returns the beverage container to the bottle feeding port 2, thereby ensuring more accurate sorting of the beverage container, avoiding fraudulent behaviors, and improving sorting efficiency.

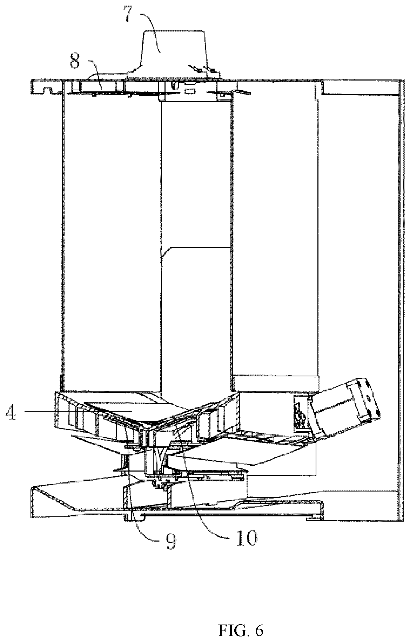

With reference to FIG. 6, light sources 8 are further arranged on the periphery of the AI recognition mechanism 7. In this embodiment, light sources 8 are arranged on two sides of the camera, and the length direction of the light sources 8 is set along the length direction of the conveying mechanism 4, so that the camera can capture and recognize the beverage container more accurately through the light sources 8.

In some embodiments, a weight sensor 9 is further arranged on the conveying mechanism 4. The weight sensor 9 may be arranged on an upper or lower surface of the conveyor belts according to the type of the conveyor belts. It can be determined through the weight sensor 9 whether the weight of each beverage container meets set weight requirements. By sensing excessively heavy or light weight of the beverage container, whether there is residual liquid in the beverage container or suspected fraud can be determined, and if so, the beverage container will be rejected. The beverage container containing a large amount of residual liquid will affect subsequent recycling quality. Therefore, the weight sensor 9 can assist in improving the accuracy of sorting and recycling.

In some embodiments, a metal sensor 10 is further arranged on the conveying mechanism 4, and the metal sensor 10 may be arranged on the upper or lower surface of the conveyor belts according to the type of the conveyor belts. The metal sensor can distinguish between three types of materials including iron, aluminum and others, which can further assist in recognizing beverage containers. Its main goal is to recognize whether the containers are aluminum cans. If some markets reject iron cans, the beverage containers can be distinguished by the metal sensor 10 to improve the accuracy of sorting and recycling.

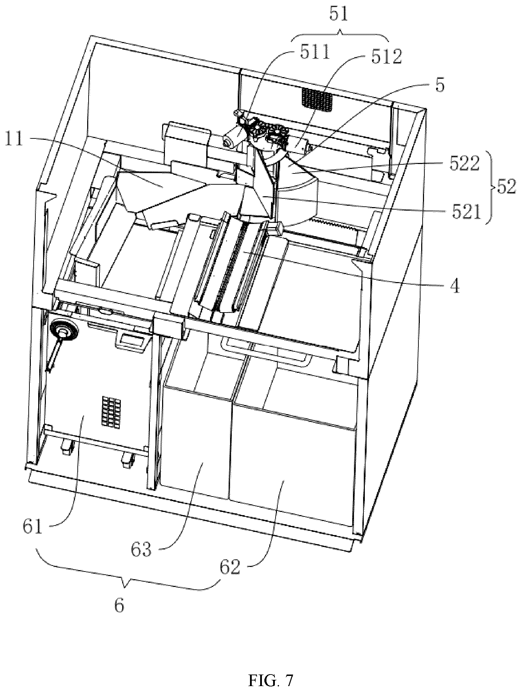

With reference to FIG. 7, the material storage bin 6 includes a glass bottle material storage bin 61, a plastic bottle material storage bin 62, and a can material storage bin 63. In conjunction with FIG. 2, the sorting mechanism 5 receives information read by the code reading mechanism 3 to sort a beverage container to the corresponding material storage bin 6, making container classification more accurate, improving recycling rate, and alleviating environmental pressure.

With continued reference to FIG. 7, in some embodiments, the sorting mechanism 5 includes a driving component 51 and two sorting components 52. In this embodiment, the driving component 51 includes a first motor 511 and a second motor 512, the sorting component 52 includes a first sorting component 521 and a second sorting component 522, the first sorting component 521 is of a plate structure, and the second sorting component 522 is of a triangular prism structure; the first motor 511 and the second motor 512 are used for driving the first sorting component 521 and the second sorting component 522 to rotate, respectively. A guide component 11 is arranged on each of the sides of the sorting components 52 that are away from each other, and a guide component 11 is also arranged on a side of one of the sorting components 52 that is adjacent to the other sorting component 52. In this embodiment, a guide component 11 is also arranged on the side of the first sorting component 521 that faces the second sorting component 522. The length and angle of the guide component 11 are set according to the distance and positions of the sorting component 52 and the material storage bin 6.

When the first motor 511 and the second motor 512 respectively drive the first sorting component 521 and the second sorting component 522 to rotate and face the same side, the beverage container falls into the plastic bottle material storage bin 62 or the glass bottle material storage bin 61 along the guide component 11. The two sorting components 52 rotate to one side of the second sorting component 522, namely, the side of the second sorting component 522 away from the first sorting component 521, corresponding to a reference direction (right side) in the figure. Then, the beverage container falls into the glass bottle material storage bin 61 along the guide component 11 on the side of the first sorting component 521 away from the second sorting component 522. In this embodiment, a soft landing mechanism is further arranged in the glass bottle material storage bin 61. The soft landing mechanism has a tension belt inside, which can provide a buffering effect when a glass bottle falls, making it less likely to break and thus improving the recycling rate.

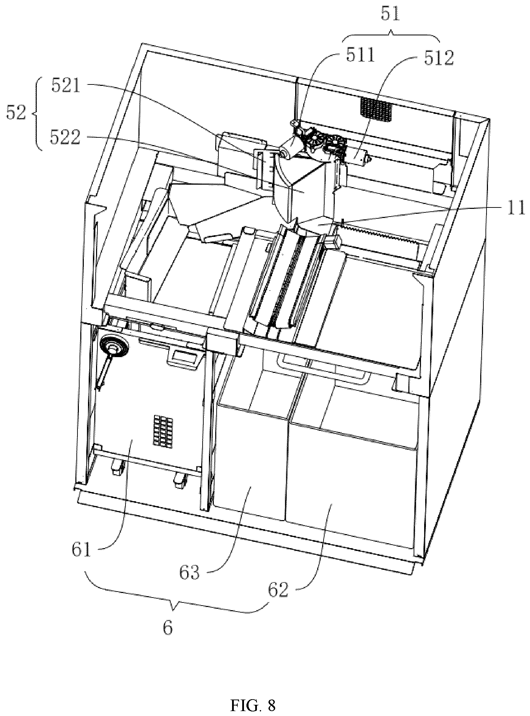

With reference to FIG. 8, the two sorting components 52 rotate to one side of the first sorting component 521, namely, the side of the first sorting component 521 away from the second sorting component 522, corresponding to a reference direction (left side) in the figure. Then, the beverage container falls into the plastic bottle material storage bin 62 along the Guide component 11 on the side of the second sorting component 522 away from the first sorting component 521.

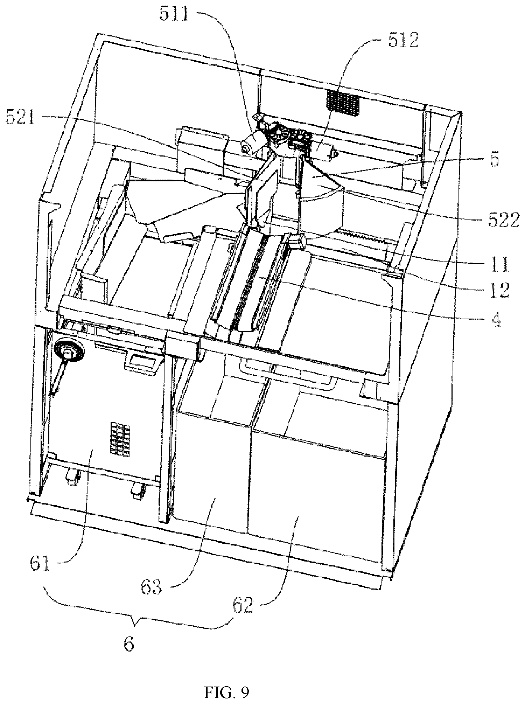

With reference to FIG. 9, when the driving component 51 drives the two sorting components 52 towards two sides, that is, in this embodiment, the reference direction in the figure is that the first motor 511 drives the first sorting component 521 to rotate to the left, and the second motor 512 drives the second sorting component 522 to rotate to the right, a gap is reserved between the first sorting components 521, a gap is reserved between the second sorting components 522, and the gaps correspond to an exit direction of the conveying mechanism 4. Then, the beverage container follows the guide component 11 on the first sorting component 521 and falls into the can material storage bin 63 by the limit of the second sorting component 522.

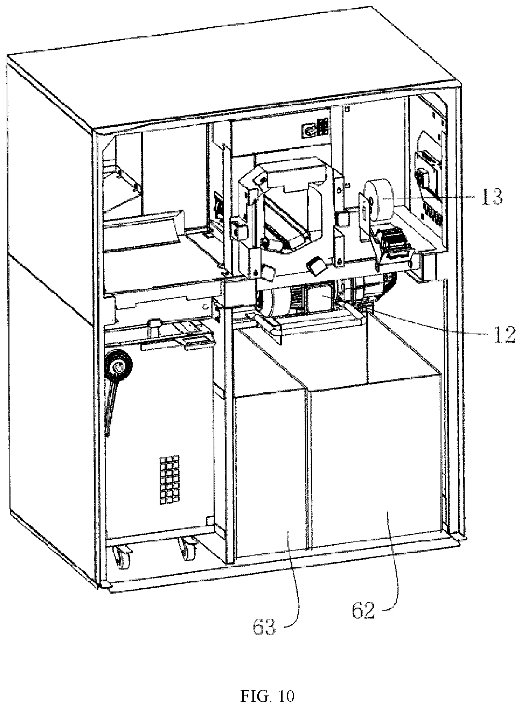

With reference to FIG. 10, in some embodiments, the beverage container sorting and recycling device further includes a compactor 12, the compactor 12 is arranged above the plastic bottle material storage bin 62 and the can material storage bin 63, and the compactor 12 is used for compacting plastic bottles and cans to reduce their volume and space occupation for better recycling. As shown in FIG. 9, the compactor 12 is connected to the sorting mechanism 5. The beverage container rolls onto the compactor 12 along the guide component 11 of the sorting mechanism 5, and is compacted by the compactor 12 into the plastic bottle material storage bin 62 or the can material storage bin 63.

In this embodiment, the beverage container sorting and recycling device further includes a printer 13, and the printer 13 is used for printing recycling information to form a receipt as user's recycling voucher, such as category and quantity of beverage containers. The beverage container sorting and recycling device further has a rebate function, and the printer 13 can print a rebate voucher.

The implementation principle of the beverage container sorting and recycling device in the embodiments of the present application is as follows: A beverage container is fed from the bottle feeding port, the information of the beverage container is obtained by the AI recognition mechanism to classify the beverage container, the beverage container is conveyed to the sorting mechanism by the conveying mechanism, and the sorting mechanism sorts the corresponding beverage container into the glass bottle material storage bin, the plastic bottle material storage bin or the can material storage bin according to the recognition result of the AI recognition mechanism, making the classification of the container more accurate, improving the recycling rate, and alleviating environmental pressure.

The above are the preferred embodiments of the present application, and the scope of protection of the present application is not limited thereto. Therefore, any equivalent changes made according to the structure, shape, and principle of the present application shall fall into the scope of protection of the present application.

## Claims

1. A beverage container sorting and recycling device, comprising a bottle feeding port, a conveying mechanism, an AI recognition mechanism, a sorting mechanism, and a material storage bin, wherein the AI recognition mechanism is arranged on the periphery of the conveying mechanism, and a light source is further arranged on the periphery of the AI recognition mechanism; the sorting mechanism is mounted on one side of the conveying mechanism; the material storage bin comprises a glass bottle material storage bin, a plastic bottle material storage bin, and a can material storage bin; the sorting mechanism is arranged to sort a beverage container to a corresponding material storage bin according to the recognition result of the AI recognition mechanism.

2. The beverage container sorting and recycling device according to claim 1, wherein the bottle feeding port comprises an annular lamp; when the device is in an idle state, the annular lamp displays a first color; when the device is in a recycling process, the annular lamp displays a second color; when the device malfunctions or is maintained, the annular lamp displays a third color; wherein the first color, the second color, and the third color are different from each other.

3. The beverage container sorting and recycling device according to claim 1, further comprises a code reading mechanism arranged on one side of the bottle feeding port and located between the bottle feeding port and the conveying mechanism.

4. The beverage container sorting and recycling device according to claim 3, wherein the code reading mechanism comprises a mounting rack and a plurality of code readers, the mounting rack has a feeding port, and the code readers are arranged at intervals along the periphery of the feeding port.

5. The beverage container sorting and recycling device according to claim 1, wherein the AI recognition mechanism is arranged to obtain the information of the beverage container for comparing with the information obtained by the code reading mechanism; when the two pieces of information are consistent, the conveying mechanism is arranged to continue conveying the beverage container; when the two pieces of information are inconsistent, the conveying mechanism is arranged to return the beverage container to the bottle feeding port.

6. The beverage container sorting and recycling device according to claim 1, wherein a weight sensor is further arranged on the conveying mechanism.

7. The beverage container sorting and recycling device according to claim 1, wherein a metal sensor is further arranged on the conveying mechanism.

8. The beverage container sorting and recycling device according to claim 1, wherein the conveying mechanism comprises two conveyor belts arranged side by side, and heights of the two conveyor belts on the sides adjacent to each other are lower than heights of the two conveyor belts on the sides away from each other.

9. The beverage container sorting and recycling device according to claim 1, wherein the sorting mechanism comprises a driving component and two sorting components, wherein a guide component is arranged on each of the sides of the sorting components that are away from each other, and a guide component is also arranged on a side of one of the sorting components that is adjacent to the other sorting component; when the driving component drives the two sorting components towards the same side, the beverage container is arranged to fall into the plastic bottle material storage bin or the glass bottle material storage bin along the guide component; when the driving component drives the two sorting components towards two sides, the beverage container is arranged to fall into the can material storage bin along the guide component.

10. The beverage container sorting and recycling device according to claim 1 or 9, further comprises a compactor, wherein the compactor is arranged above the plastic bottle material storage bin and the can material storage bin and connected to the sorting mechanism.
